Europäisches Patentamt

European Patent Office

Office européen des brevets

(11) Publication number: **0 223 300**
A2

(12) **EUROPEAN PATENT APPLICATION**

(21) Application number: 86201970.0

(22) Date of filing: 11.11.86

(51) Int. Cl.⁴: **G 01 F 1/36**, G 01 F 1/40, G 01 F 1/50, G 01 F 1/88

(30) Priority: 20.11.85 NL 8503192

(43) Date of publication of application: 27.05.87 Bulletin 87/22

(84) Designated Contracting States: AT BE CH DE ES FR GB GR IT LI LU NL SE

(71) Applicant: EMS Holland BV, Otto Hahnweg 3, NL 3731 CC De Bilt (NL)

(72) Inventor: Kramer, A., Otto Hahnweg 3, NI-3731 CC De Bilt (NL)

(74) Representative: Flamman, Han, LIOC Patents and Licensing P.O. Box 54, NL-3970 AB Driebergen (NL)

(54) Gas meter.

(57) Method for the measurement of gas quantities which flow through an inlet opening (1) and device for the implementation of that method, whereby the gas is conducted through a block (2) of binary clack valves which are connected in parallel with maximum passage capacities which differ from one another, whereby the total drop of pressure across the block (2) is maintained at a pre-determined value by continuously detecting deviations from this value with a pressure detector (3) which controls a regulation system (4) with the signals which correspond therewith, which, depending on the signals which are received, opens and/or closes clacks in valves, after which the volume flow is read-off from the position of the valves. The device is preferably equipped with a precision adjustment for the drop of pressure, with correction sensors for temperature and pressure of the gas, and with a microprocessor which measures the gas quantities.

Gas meter

The invention concerns a method for the measurement of gas quantities which flow through an inlet opening.

Similar methods in various forms of implementation are commonly known. Such a method is for example applied in a mechanical gas meter whereby quantities of a gas which are specifically measured via a set of slide-valves are passed via a set of movable bellows. These bellows drive the valves and also a mechanical counter.

The disadvantages of this measuring method are that as a result of the changing behaviour of the bellows the measurement error is not constant over the course of time, and that the mechanics are subject to wear. As a result of this the deviation can become far larger than the permitted tolerances. Another disadvantage of this method is that the changing pressure and temperature of the gas are completely ignored, whereby the weight quantity which is supplied, which is a measurement for the energy content, is never the same for each volume quantity supplied.

The purpose of the invention is to provide a method and a device for the implementation of the method whereby the above mentioned disadvantages do not occur. The method according to the invention is characterised for that purpose by the fact that the gas is passed through a block of binary clack valves which are connected in parallel with maximum passage capacities which differ from one another, whereby the total drop of pressure across the block is maintained at a pre-determined value by continuously detecting deviations from this value with a pressure detector which controls a regulation system with the signals which correspond therewith, which, depending on the signals which are received, opens and/or closes clacks in valves, after which the volume flow is read-off from the position of the valves.

A number of open/closed clack valves which are connected in parallel with passages according to a binary system is in itself known. Application of binary clack valves for the implementation of the method according to the invention is, however, not known.

A preferred form of the method according to the invention is characterised in that the precision adjustment of the drop in pressure for very small quantities of gas is obtained by controlling the passage capacity of the valve with the smallest maximum passage capacity via a clack which is continuously in a position between open and closed. By also measuring these smallest gas quantities the total scope of the measurement shall be increased without effecting the precision of the measurement.

In order to be able to measure weight quantities of a gas it is necessary to make corrections according to the pressure and temperature in the pipes. For that purpose a further preferred form of the method according to the invention is characterised in that, in order to determine the weight quantities of a gas which have flown through an opening, the temperature of the gas and the pressure of the gas in the supply pipe are determined with the aid of sensors, with the aid of which the details of the volume flow are corrected. The sensors measure the temperature, the difference in pressure across the valves, and the overpressure, directly at the binary valves. The pressure measurement can be extended according to choice with a measurement of the absolute pressure, which increases the precision when determining the weight quantities of the gas.

2

It is particularly advantageous to carry out the correction with a micro-processor. The micro-processor can include the measurement errors which are determined when calibrating the meter, which are stored during that calibration in a built-in memory, in the said determination of the weight quantities. As a result of this each quantity of gas which has been measured under observance of the individual deviating qualities of each meter can be measured and calculated into weight quantities with the greatest possible precision.

If one wishes to measure the heat content of a certain quantity of gas the micro-processor is set-up according to the composition of the gas. Some qualities of the gas change when the pressure and the temperature change. It is therefore not only necessary to store the qualities as fixed data in a memory, but to have these be dependent on the changing pressure and temperature. Including the actual qualities of the gas at the time of the measurement in the determining of the heat content increases the precision of the measurement.

The design also includes a device for the implementation of the method described above. Such a device is characterised in that it contains a block of binary adjustable clack valves which are connected in parallel behind the inlet, each with different maximum passage capacities, a pressure detector for measuring the differences which occur in the drop of pressure across the block, coupled to a system which, controlled by these differences, adjusts the clack positions. The clack of the valve with the smallest maximum passage capacity is preferably continuously adjustable between open and closed.

If ones wishes to use the device for the measurement of weight quantities of gas, then it is equipped with a temperature sensor and a pressure sensor in the supply pipe, both coupled with the part of the device which measures the gas quantities.

It is advantageous if the device for the measurement of the gas quantities is equipped with a micro-processor.

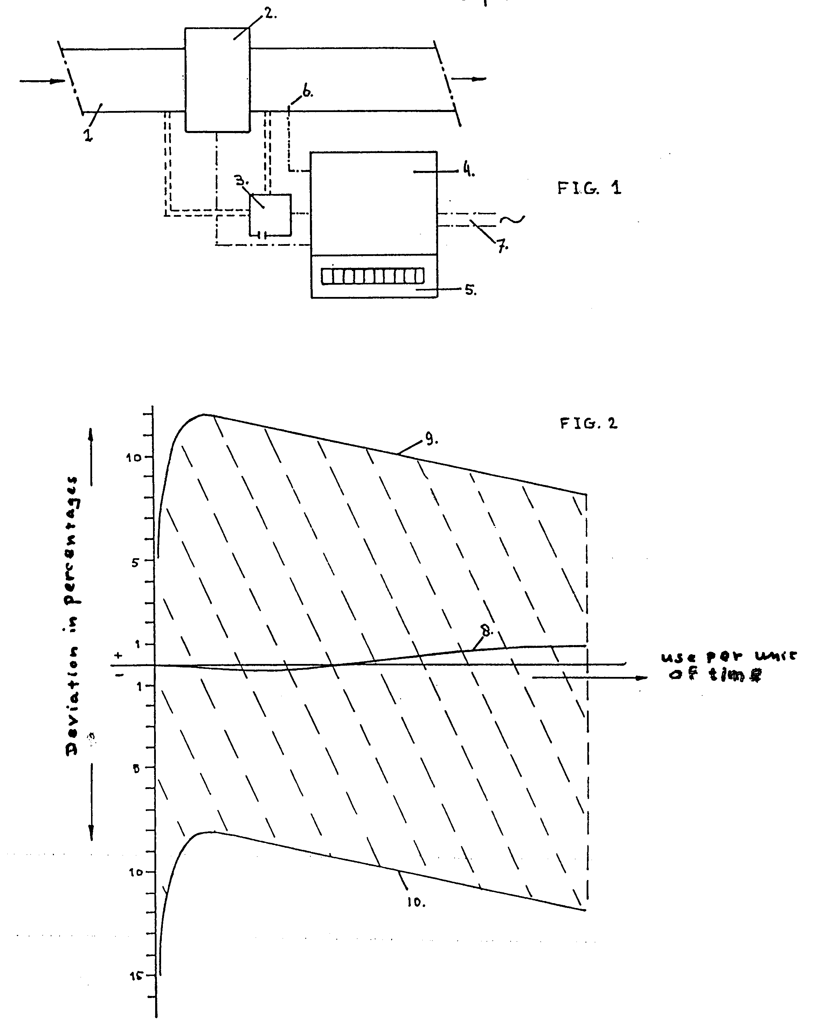

The invention shall be explained further according to the drawings, of which fig.1. gives a schematic break-down of a device according to the invention, and fig.2. the relationship between measured quantities of gas and permitted compass error percentages.

In fig.1. the gas flows according to the arrows given through the supply pipe 1. via the block 2., in which the binary clack valves which are connected in parallel are situated. The pressure sensor 3. measures the pressure difference across the block via two channels and passes this on to the micro-processor. This micro-processor with the memory and the driving unit for controlling the binary clacks are situated in the part 4. of the gas meter which contains all electronic components and which also controls unit 5. The temperature of the gas is measured with the aid of a temperature sensor 6. which is also coupled to the micro-processor. The electronic components can be powered in the manner given at 7.

In fig.2. the deviation percentages are given on the vertical axis and the weight quantities of gas which have flown through per unit of time on the horizontal axis. Curve 8. relates to the precision of the weight quantities of the gas which have been determined by the method of the invention. The other two curves 9. and 10. indicate the spread of the deviations which are observed with the method as applied in a mechanical meter, if with the aid of the pressure and the temperature of the gas in the supply pipe weight quantities of the gas are determined per unit of time.

5

C L A I M S

1. Method for measuring gas quantities which flow through an inlet opening (1),

<u>characterised in that</u> the gas is passed through a block (2) of binary clack valves which are connected in parallel with maximum passage capacities which differ from one another, whereby the total drop of pressure across the block (2) is maintained at a pre-determined value by continuously detecting deviations from this value with a pressure detector (3) which controls a regulation system (4) with the signals which correspond therewith, which, depending on the signals which are received, opens and/or closes clacks in valves, after which the volume flow is read-off from the position of the valves.

2. Method according to claim 1,

<u>characterised in that</u> the precision adjustment of the pressure drop for very small quantities of gas is obtained by adjusting the passage capacity of the valve with the smallest maximum passage capacity via a clack which can be continuously adjusted between an open and a closed position.

3. Method according to claim 1 or 2,

<u>characterised in that</u> for determining the weight quantities of a gas which has flown through an opening (1) the temperature of the gas and the pressure of the gas in the supply pipe are determined with the aid of sensors, with the aid of which the details on the volume flow are corrected.

4. Method according to claim 3,

<u>characterised in that</u> the correction is carried out with a micro-processor.

5. Method according to claim 4,

<u>characterised in that</u> for determining the heat content of the quantity of gas which has flown through an opening (1) the micro-processor is adjusted according to the composition of the gas.

6. Device for the implementation of the method according to claim 1,

<u>characterised in that</u> it contains a block (2) of binary adjustable clack valves which are connected in parallel with maximum passage capacities which differ from one another behind the inlet (1), a pressure detector (3) for measuring the differences which occur in the drop of pressure across the block (2), coupled with a system (4) which, controlled by these differences in drop of pressure, adjusts the position of the clacks.

7. Device according to claim 6, for the implementation of the method according to claim 2,

<u>characterised in that</u> the clack of the valve with the smallest maximum passage capacity is continuously adjustable between open and closed.

8. Device according to claim 6 or 7, for the implementation of the method according to claim 3,

<u>characterised in that</u> it is equipped with a temperature sensor and with a pressure sensor in the supply pipe, both coupled with the part of the device which measures the gas quantities.

7

9. Device according to claim 8,

characterised in that the part of the device which measures the gas quantities is a micro-processor.

11/1

FIG. 1

FIG. 2

Deviation in percentages

use per unit of time